# EUROPEAN PATENT APPLICATION

(11) **EP 2 415 918 A1**
(43) Date of publication of application: **08.02.2012**
(21) Application number: 10758622.4
(22) Date of filing: 29.03.2010
(51) Int. Cl.: D06C 3/06, A61F 13/15, A61F 13/49, B29C 55/18, D06H 7/00

(54) **PROCESSING DEVICE AND SHEET MEMBER PROCESSING METHOD**

(30) Priority: 03.04.2009 JP 2009091502
(71) Applicant: Uni-Charm Corporation, Ehime 799-0111 (JP)
(72) Inventor: AZUMA, Hideki, Kanonji-shi Kagawa 769-1602 (JP); MURAKAMI, Yasuo, Kanonji-shi Kagawa 769-1602 (JP)
(74) Representative: Eke, Philippa Dianne
(86) International application number: PCT/JP2010/055535
(87) International publication number: WO 2010/113851

(57) **Abstract**

A processing apparatus that processes a sheet member used in manufacturing an absorbent article, in which the processing apparatus includes (A) a mounting member on which the sheet member is mounted, (B) a rotating roller that rotates with a peripheral surface thereof opposing the mounting member, (C) a processing component that is provided on the peripheral surface and movable on the peripheral surface along an axial direction of the rotating roller, and (D) an adjustment mechanism that adjusts a relative position of the processing component with respect to the peripheral surface in the axial direction, (E) the processing component processing the sheet member by coming into contact with the sheet member with the rotating roller being rotated, while the sheet member is passing between the mounting member and the rotating roller with the sheet member being mounted on the mounting member, (F) the adjustment mechanism adjusting the relative position by moving the processing component on the peripheral surface along the axial direction.

## Description

### Technical Field

The present invention relates a processing apparatus and a method of processing a sheet member. Specifically, the present invention relates to a processing apparatus that processes a sheet member used in manufacturing an absorbent article and a method of processing the sheet member.

### Background Art

Processing apparatuses that process sheet members used for manufacturing absorbent articles are already known, and there is a type of apparatus that includes a mounting member on which the sheet member is mounted, a rotating roller that rotates with a peripheral surface thereof opposing the mounting member, and a processing component that is provided on the peripheral surface and movable on the peripheral surface along an axial direction of the rotating roller. With the processing apparatus of the above-mentioned configuration, the processing component processes the sheet member by coming into contact with the sheet member with the rotating roller being rotated, while the sheet member is passing between the mounting member and the rotating roller with the sheet member being mounted on the mounting member.

With the processing apparatus of the above-mentioned configuration, in order to process the sheet member with an increased accuracy, an accurate positioning of the processing component (positioning with respect to the mounting member) is required. To this end, in assembling the processing apparatus, the position of the processing component in the axial direction of the rotating roller may be adjusted (see, e.g., PTL 1). As a position adjustment measure for such processing component, it is conceivable to move the rotating roller itself, which has the processing component provided on its peripheral surface, in the axial direction thereof.

### Citation List

### [Patent Literature]

[PTL 1] JP-A-H6-507536

### Summary of Invention

### Technical Problem

However, in a case where position adjustment of the processing component is performed by moving the rotating roller, since a greater force and more time is required as compared to a case in which the processing component as a single body is moved, and position adjustment of the rotating roller itself is required after having performed the position adjustment of the processing component, a greater effort will be required and the work becomes cumbersome.

The present invention has been contrived in view of the drawbacks described above, and its object is to perform positioning of the processing component in a more simplified manner.

### Solution to Problem

In order to overcome the above-described drawbacks, a principal aspect of the invention is a processing apparatus that processes a sheet member used in manufacturing an absorbent article, and the processing apparatus includes (A) a mounting member on which the sheet member is mounted, (B) a rotating roller that rotates with a peripheral surface thereof opposing the mounting member, (C) a processing component that is provided on the peripheral surface and movable on the peripheral surface along an axial direction of the rotating roller, and (D) an adjustment mechanism that adjusts a relative position of the processing component with respect to the peripheral surface in the axial direction, (E) the processing component processing the sheet member by coming into contact with the sheet member with the rotating roller being rotated, while the sheet member is passing between the mounting member and the rotating roller with the sheet member being mounted on the mounting member, (F) the adjustment mechanism adjusting the relative position by moving the processing component on the peripheral surface along the axial direction.

Features of the invention other than those described above will become clear by the description of the present specification and the accompanying drawings.

### Advantageous Effects of Invention

According to the present invention, positioning of the processing component utilized in the processing of the sheet member used in the manufacturing of the absorbent article can be performed in a simplified manner.

### Brief Description of Drawings

FIG. 1 is an external view of a diaper 1.
FIG. 2 is an exemplary diagram of an embodiment of a drawing step.
FIG. 3A is a cross-sectional view illustrating a sheet member S that is bitten between drawing patterns 13, 14.
FIG. 3B is a diagram illustrating the sheet member S that has been drawn.
FIG. 4 is a diagram illustrating an exemplary configuration of a drawing apparatus 10.
FIG. 5A is a diagram illustrating how the sheet member S is mounted on a second rotating roller 12.
FIG. 5B is a diagram illustrating an internal structure of the first rotating roller 11 and the second rotating roller 12.
FIG. 6 is an enlarged view illustrating how the first drawing pattern 13 and the second drawing pattern 14 are meshed.
FIG. 7 is an explanatory diagram of a pattern-side adjustment mechanism 30 (part 1).
FIG. 8 is an explanatory diagram of the pattern-side adjustment mechanism 30 (part 2).
FIG. 9 is an explanatory diagram of the pattern-side adjustment mechanism 30 (part 3).
FIG. 10 is an explanatory diagram of the pattern-side adjustment mechanism 30 (part 4).
FIG. 11 is an explanatory diagram of a shaft-side adjustment mechanism 40 (part 1).
FIG. 12 is an explanatory diagram of the shaft-side adjustment mechanism 40 (part 2).
FIG. 13 is an explanatory diagram of the shaft-side adjustment mechanism 40 (part 3).
FIG. 14 is an explanatory diagram of the shaft-side adjustment mechanism 40 (part 4).
FIG. 15 is an explanatory diagram of the shaft-side adjustment mechanism 40 (part 5).
FIG. 16 is an explanatory diagram of a mechanism that adjusts a gap of a roller gap space Ar.
FIG. 17 is a diagram illustrating assembling steps of the drawing apparatus 10 in Figs. 17A to 17C.
FIG. 18 is a diagram illustrating the drawing apparatus 10 of a first variant.
FIG. 19A is a diagram illustrating the pattern-side adjustment mechanism 30 of a first variant (part 1).
FIG. 19B is a diagram illustrating the pattern-side adjustment mechanism 30 of the first variant (part 2).
FIG. 20 is a diagram illustrating the drawing apparatus 10 of a second variant.

### Mode for Carrying Out the Invention

At least the following matters will become apparent from descriptions of this present specification and of the accompanying drawings.

First, an aspect of the present invention is a processing apparatus that processes a sheet member used in manufacturing an absorbent article, and the processing apparatus includes (A) a mounting member on which the sheet member is mounted, (B) a rotating roller that rotates with a peripheral surface thereof opposing the mounting member, (C) a processing component that is provided on the peripheral surface and movable on the peripheral surface along an axial direction of the rotating roller, and (D) an adjustment mechanism that adjusts a relative position of the processing component with respect to the peripheral surface in the axial direction, (E) the processing component processing the sheet member by coming into contact with the sheet member with the rotating roller being rotated, while the sheet member is passing between the mounting member and the rotating roller with the sheet member being mounted on the mounting member, (F) the adjustment mechanism adjusting the relative position by moving the processing component on the peripheral surface along the axial direction. With a processing apparatus of such structure, since position adjustment of the processing component as a single body can be performed with out moving the rotating roller, the position adjustment is simplified.

Further, with the processing apparatus described above, the processing component may be provided at each end section of the peripheral surface in the axial direction, two such adjustment mechanisms being provided, among the two adjustment mechanisms, one adjustment mechanism may adjust the relative position of the processing component on one end side in the axial direction by moving the processing component on one end side on the peripheral surface along the axial direction, and the other adjustment mechanism may adjust the relative position of the processing component on the other end side in the axial direction by moving the processing component on the other end side on the peripheral surface along the axial direction. With such structure, adjustment of the relative position can be performed individually for each of the processing components provided on the both end sections in the axial direction of the rotating roller.

Further, with the processing apparatus described above, the processing component may be a movable processing component, the processing apparatus may further include: a fixed processing component provided on the peripheral surface, a position of the fixed processing component being fixed on the peripheral surface; and a shaft-side adjustment mechanism that adjusts a position of the rotating roller in the axial direction, the movable processing component being adjacent to the fixed processing component in the axial direction, the shaft-side adjustment mechanism adjusting the position of the rotating roller in the axial direction by moving the rotating roller in the axial direction. With such configuration, the position adjustment of the fixed processing component that cannot be handled with the adjustment mechanism is carried out by moving the rotating roller, and thereafter, the position adjustment of the movable processing component is carried out by the adjustment mechanism. Accordingly, position adjustment of the movable processing component and the fixed processing component can be performed respectively with an increased accuracy.

Further, with the processing apparatus described above, the processing component may be a movable processing component arranged at each end section of the peripheral surface in the axial direction, the processing apparatus may further include: a fixed processing component provided on the peripheral surface, a position of the fixed processing component being fixed on the peripheral surface; and a shaft-side adjustment mechanism that adjusts a position of the rotating roller along in the axial direction, the fixed processing component being situated between the movable processing components in the axial direction, wherein, two such adjustment mechanisms may be provided, among the two adjustment mechanisms, one adjustment mechanism may adjust the relative position of the movable processing component on one end side in the axial direction by moving the movable processing component on one end side on the peripheral surface along the axial direction, the other adjustment mechanism may adjust the relative position of the movable processing component on the other end side in the axial direction by moving the movable processing component on the other end side on the peripheral surface along the axial direction, and the shaft-side adjustment mechanism may adjust the position of the rotating roller in the axial direction by moving the rotating roller in the axial direction. With such structure, the position adjustment of the fixed processing component that cannot be handled with the adjustment mechanism is carried out by moving the rotating roller, and thereafter, the individual adjustment of the relative position of each of the processing components arranged at both end sections in the axial direction of the peripheral surface of the rotating roller is performed with the respective adjustment mechanisms. As a result, the respective position adjustment of the movable processing component and the fixed processing component can be performed with an increased accuracy.

Further, the processing apparatus described above may be configured such that the rotating roller is a first rotating roller that has a first peripheral surface as the peripheral surface, the processing component is a plurality of first drawing patterns arranged along the axial direction, the mounting member is a second rotating roller that has a second peripheral surface and rotates with the sheet member being mounted thereon, a plurality of second drawing patterns arranged along the axial direction are provided on the second peripheral surface, the first drawing pattern and the second drawing pattern are disk-like patterns, the first drawing pattern and the second drawing pattern are arranged alternately in the axial direction, and the first drawing pattern and the second drawing pattern cause the sheet member to extend along the axial direction by nipping the sheet member therebetween with the first rotating roller and the second rotating roller being rotated, while the sheet member is passing between the second rotating roller and the first rotating roller with the sheet member being mounted on the second rotating roller. With such configuration, the position adjustment for adjusting the clearance between the first drawing pattern and the second drawing pattern in the axial direction can be performed in a simplified manner.

Further, with the processing apparatus described above, among the first rotating roller and the second rotating roller, at least one of the rotating rollers may be supported in a movable state in such a manner that an interval between the first peripheral surface and the second peripheral surface varies. With such configuration, a degree of meshing between the first drawing pattern and the second drawing pattern is adjustable and, when passing the sheet member between the first rotating roller and the second rotating roller at the time of setting the drawing apparatus, the interval can be broadened to facilitate the passing of the sheet member.

Further, with the processing apparatus described above, the sheet member may be made of a material having a thermoplastic property, and among the first rotating roller and the second rotating roller, at least one of the rotating rollers may have a heating mechanism provided inside thereof that heats the rotating roller. In order to perform an appropriate drawing of the sheet member, there is a case where at least one of the first rotating roller and the second rotating roller is heated. In such a case, since the rotating roller on the heated side is subject to thermal expansion along the axial direction, even if the clearance between the first drawing pattern and the second drawing pattern is adjusted before operation of the apparatus, the clearance will change again during operation of the apparatus. At this time, with the structure of the present invention, even if the clearance has changed during the operation of the apparatus, position adjustment for readjusting the clearance can be performed in a simplified manner. In other words, with the structure described above, the effect of the present invention will be more useful.

Further, the processing apparatus described above may be configured such that among two directions in mutually opposite directions along the axial direction, one direction is referred to as a first direction and the other direction is referred to as a second direction, the first direction being a direction orienting from the processing component to an end that is nearer to the processing component among the both ends of the rotating roller in the axial direction, the adjustment mechanism may include: a pulling screw that pulls the processing component in the first direction while being screwed; and a pressing screw that presses the processing component in the second direction while being screwed, in a case where the adjustment mechanism may move the processing component in the first direction, the pressing screw is screwed after the pulling screw has been screwed, and in a case where the adjustment mechanism may move the processing component in the second direction, the pulling screw is screwed after the pressing screw has been screwed. With such structure, the relative position of the processing component can be adjusted with a simple structure.

Further, a method of processing a sheet member used in manufacturing an absorbent article is also achieved which includes: (A) processing, while the sheet member is passing between a mounting member on which the sheet member is mounted and a rotation that rotates with a peripheral surface thereof opposing the mounting member with the sheet member being mounted on the mounting member, the sheet member by causing a processing component provided on the peripheral surface of the rotating roller to come into contact with the sheet member with the rotating roller being rotated, (B) the processing component being movable on the peripheral surface of the rotating roller along the axial direction, (C) the method further including adjusting, by an adjustment mechanism that adjusts a relative position of the processing component with respect to the peripheral surface in the axial direction, before the processing, the relative position by moving the sheet member on the peripheral surface along the axial direction. With such method, the position adjustment of the processing component can be performed without moving rotating roller and in a facilitated manner.

### === Processing Apparatus of the Present Embodiment ===

In the present embodiment, a drawing apparatus 10 that draws a sheet member S in a predetermined drawing direction will be described as an exemplary processing apparatus, and an object to be processed is the sheet member S used in the manufacture of absorbent articles such as diapers and sanitary napkins. That is to say, a method of drawing the above-mentioned sheet member S corresponds to an exemplary method of processing the sheet S. Hereinafter, the sheet member S, which is an object to be processed, and a drawing step performed by the drawing apparatus 10 will be described respectively.

### <<Sheet member S>>

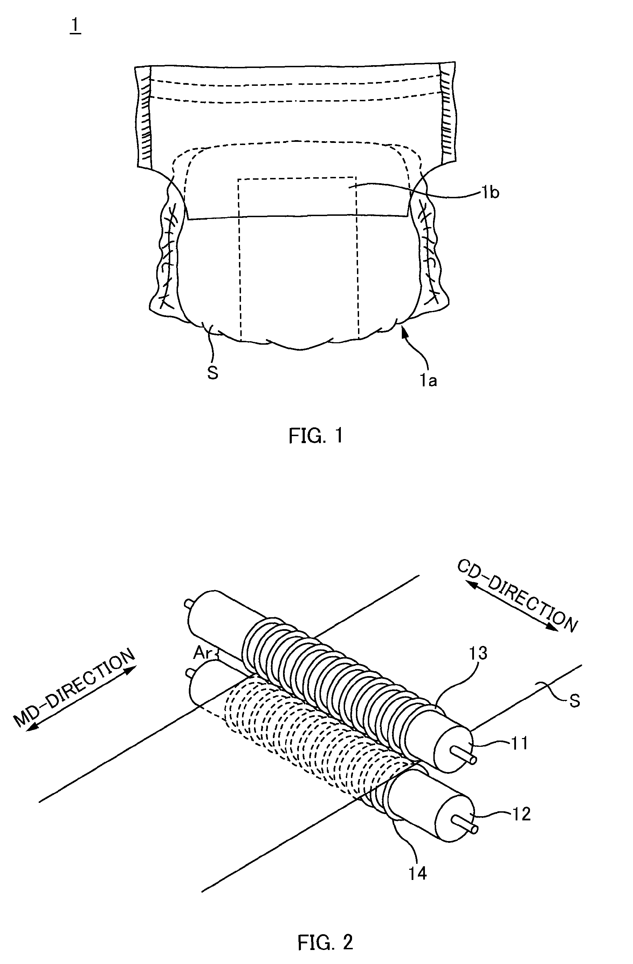

The sheet member S is a material made of nonwoven fabric, a film sheet, or a composite sheet in which these are bonded together and, for example, used as a constituent element of the diaper 1 illustrated in Fig. 1. Specifically, the sheet member S, which is an object to be processed by drawing, is combined with other materials constituting the diaper 1, and forms an exterior 1a of a section placed against the crotch of a wearer when the diaper 1 is worn. An absorbent body 1b that absorbs bodily fluid such as urine is secured on an inner surface (a surface on a side that comes into contact with the skin of the wearer) of the sheet member S. Further, gathered sections (not shown) for preventing leakage of bodily fluid or excretion (a so-called side leakage) are formed at portions of the sheet member S that are located on both sides of the absorbent body 1b.

The sheet member S of the present embodiment is made of a thermoplastic material. Specifically, the sheet member S made of nonwoven fabric may be, for example, produced by mixing thermoplastic fiber having extensibility (a property of extending in a non-elastic manner) and thermoplastic fiber having stretchability (a property of extending in an elastic manner) or produced solely by thermoplastic fiber having extensibility. The sheet member S made of a film sheet may be, for example, produced by using a thermoplastic plastic film as a material. The sheet member S made of a composite sheet of nonwoven fabric and a film sheet may be, for example, produced by bonding the nonwoven fabric and the film sheet, which have been described above as illustrative examples.

As will be described later, when performing a drawing process, the sheet member S is heated to an appropriate temperature (specifically, an appropriate temperature within a range of at or below the melting point of the constituent material of the sheet member S), thereby causing the sheet member S to exhibit its plasticity during the drawing process to facilitate the drawing of the sheet member S and to prevent the sheet member S from breaking during the drawing process.

It is to be noted that, on a production line of the diaper 1, the sheet member S is fed in a continuous state in a continuous direction. In other words, on the production line of the diaper 1 of the present embodiment, the sheet member S moves along the continuous direction and towards a position where the drawing process is performed. Then, after the drawing process, the sheet member S in the continuous state is bonded together with other materials and then cut into a shape of a product. Hereinafter, a direction in which the sheet member S continues (i.e., a transport direction of the sheet member S) is referred to as an MD-direction and a direction intersecting with the MD-direction (in other words, a direction along which a width direction of the sheet member S lies) is referred to as a CD-direction.

### <<Drawing Step>>

A drawing step is a processing step in which the sheet member S is drawn in the CD-direction, i.e., the width direction of the sheet member S. In other words, in the present embodiment, the CD-direction corresponds to a drawing direction. A mode in which such drawing step is performed is illustrated in Fig. 2. Fig. 2 is a diagram illustrating an embodiment of the drawing step.

As shown in Fig. 2, the drawing step is performed while the sheet member S is passing between a pair of rotating rollers 11, 12 each rotating about an axis extending along the CD-direction. A plurality of drawing patterns 13, 14 arranged along the CD-direction are provided on a peripheral surface of each of the rotating rollers 11, 12. These drawing patterns 13, 14 are disk-like patterns each protruding in a radial direction of each rotating roller 11, 12 and extending along a peripheral direction of each rotating roller 11, 12. It is to be noted that each drawing pattern 13, 14 may form a disk-like shape as single piece (a single body) or form a disk-like shape as a combination of a plurality of segmented pieces.

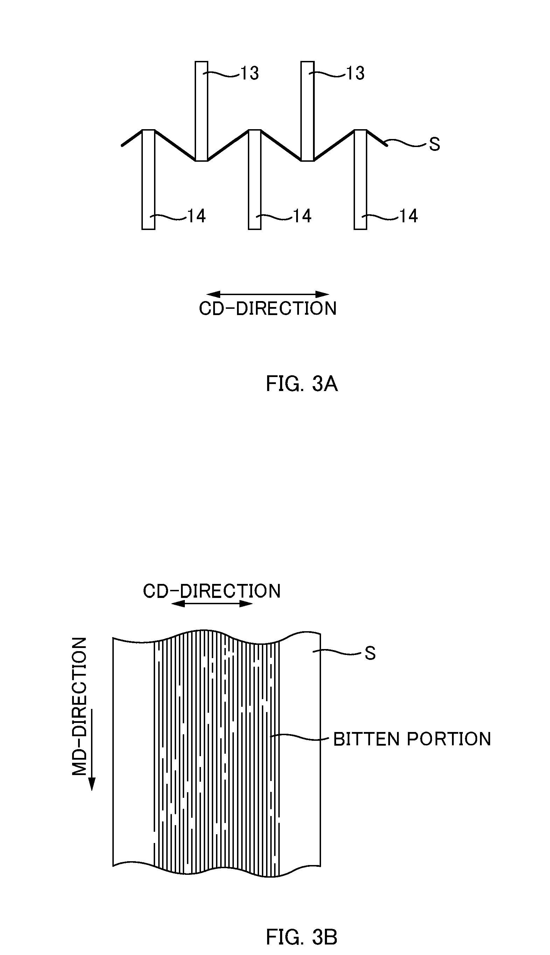

In a roller gap space Ar through which the sheet member S passes, the drawing patterns 13 provided on one of the rotating roller 11 and the drawing patterns 14 provided on the other rotating roller 12 mesh with each other. In other words, when passing through the above-mentioned roller gap space Ar, the sheet member S is bitten between the drawing patterns 13, 14. At this time, as shown in Fig. 3A, the sheet member S is subject to a tension at a contact point with each of the drawing patterns 13, 14 and thus deformed in a corrugated manner along its width direction and extended in the width direction. Fig. 3A is a cross-sectional view of the sheet member S that is bitten between the drawing patterns 13, 14.

As the tension is released from the above-mentioned state, a portion of the sheet member S bitten between the drawing patterns 13, 14 attempts to restore its original state, but becomes slack with pleats being formed due to elongation in its width direction. In other words, as shown in Fig. 3B, the portion that is bitten between the drawing patterns 13, 14 will be extended in the CD-direction by an amount of slack. Fig. 3B is a diagram illustrating the extended sheet member S.

As has been described above, in the drawing step, the sheet member S that is passing through the roller gap space Ar is bitten between the drawing patterns 13, 14 to draw the sheet member S in the width direction. It is to be noted that the purpose of performing the drawing step is to increase a planar size of the sheet member S in the width direction to enlarge an effectively usable region in the sheet member S. Also, a portion of the sheet member S where the drawing step has been applied (a portion bitten between the drawing patterns 13, 14) is provided with stretchability produced therein after the drawing step and raised by a height of the pleats that have been formed. By making use of such a state, it is also possible to form the above-mentioned gathered section at a portion section where the drawing step has been applied.

### <<Drawing Apparatus 10>>

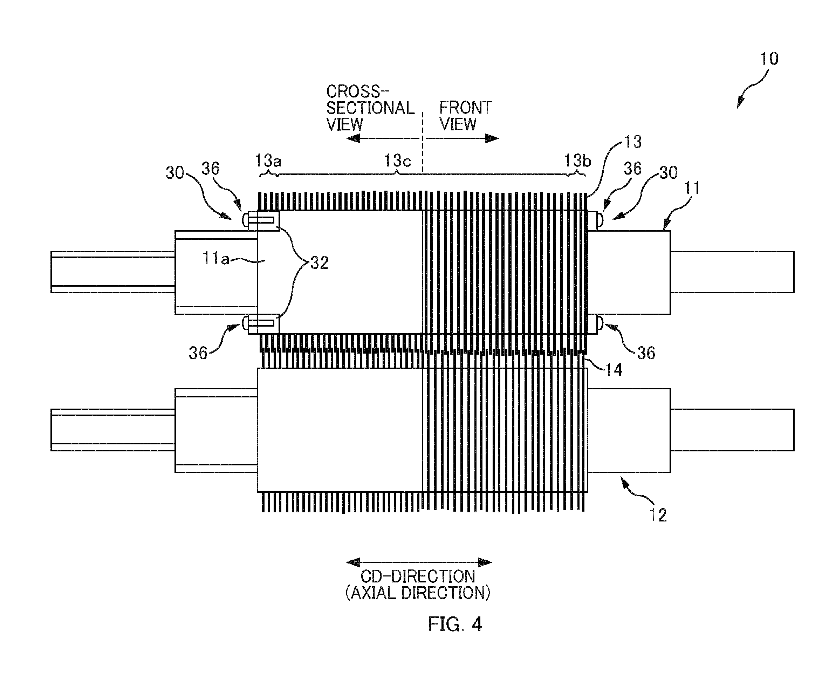

Next, as an exemplary configuration of the drawing apparatus 10 that performs the above-mentioned drawing step, a configuration illustrated in Fig. 4 will be described. Fig. 4 is a diagram illustrating an exemplary configuration of the drawing apparatus 10. It is to be noted that, in Fig. 4, the right hand side of the drawing is a front view and the left hand side is a cross-sectional view.

As shown in Fig. 4, the drawing apparatus 10 has the pair of rotating rollers 11, 12 described above and the drawing patterns 13, 14 provided on the peripheral surfaces of these rotating rollers 11, 12.

The pair of rotating rollers 11, 12 each rotates about an axis extending along the CD-direction. Hereinafter, one of the rotating rollers 11 is referred to as a first rotating roller 11 and the other rotating roller 12 is referred to as the second rotating roller 12. Also, a peripheral surface of the first rotating roller 11 is referred to as a first peripheral surface and a peripheral surface of the second rotating roller 12 is referred to as a second peripheral surface. Also, the drawing pattern 13 provided on the first peripheral surface is referred to as a first drawing pattern 13 and the drawing pattern 14 provided on the second peripheral surface is referred to as a second drawing pattern 14.

The first rotating roller 11 rotates with the first peripheral surface opposing the second rotating roller 12 (more specifically, the second peripheral surface).

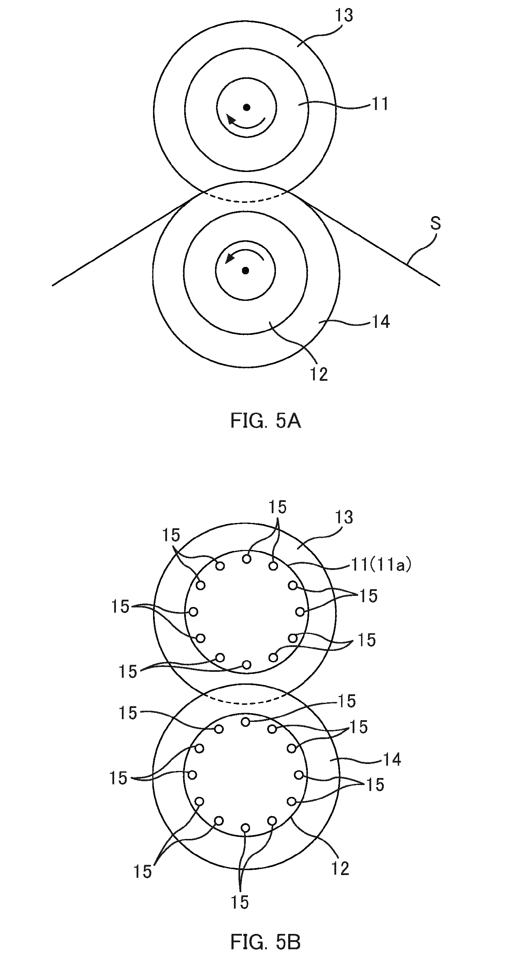

As shown in Fig. 5A, the second rotating roller 12 rotates with the sheet member S lying along the second drawing pattern 14 provided on the second peripheral surface. In other words, the second rotating roller 12 rotates with the sheet member S being mounted thereon and corresponds to the mounting member that mounts the sheet member S thereon. Fig. 5A is a side view (seen from one end side in the CD-direction) showing how the sheet member S is mounted on the second rotating roller 12. With the rotation of the second rotating roller 12, the sheet member S moves along the MD-direction (i.e., a direction of continuation of the sheet member S) and passes through the roller gap space Ar.

As has been described above, when the drawing apparatus 10 performs the drawing step, the second rotating roller 12 receives a processing component provided on the first rotating roller 11 (specifically, a group of patterns 13a, 13b, 13c consisting of the first drawing patterns 13) with the sheet member S mounted thereon. In other words, the second rotating roller 12 serves as a stage for performing a drawing step with the sheet member S mounted thereon during the drawing step. However, it is not limited the configuration described above (a configuration in which the sheet member S is laid around the second rotating roller 12), but may be a configuration in which the sheet member S travels linearly towards the roller gap space Ar and, when passing through the roller gap space Ar, mounted and placed on the second rotating roller 12.

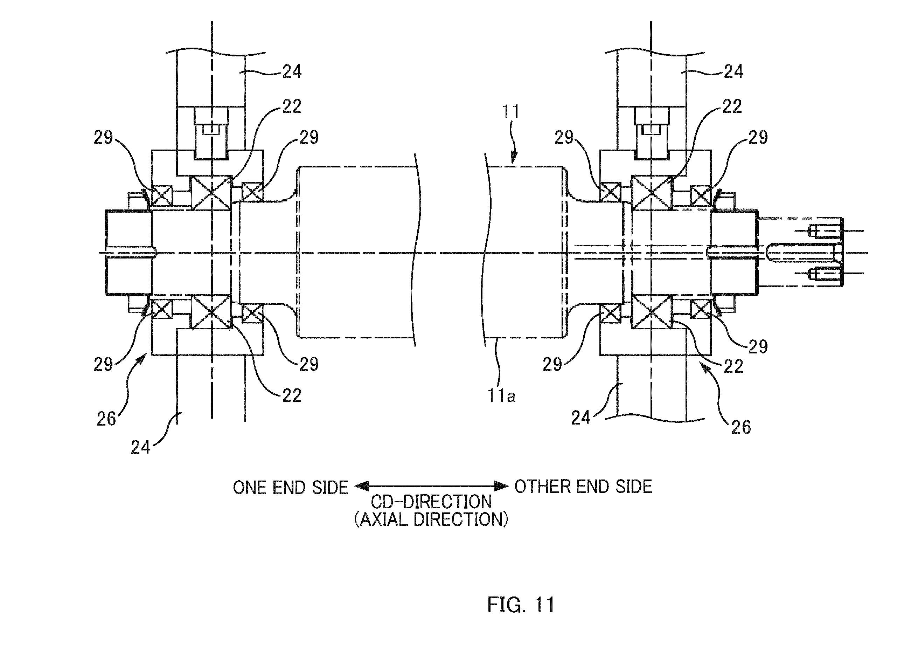

Each of the first rotating roller 11 and the second rotating roller 12 is rotatably supported by a rectangular frame 24 via a bearing 22 at a shaft section thereof (both end sections in the axial direction) and are capable of performing a thrust movement (a movement along the CD-direction) by a shaft-side adjustment mechanism 40 described later (see Fig. 11).

A plurality of the first drawing patterns 13 are provided and arranged along the CD-direction (i.e., an axial direction of each of the rotating rollers 11, 12) and form a group of patterns. As shown in Fig. 4, this group of patterns is divided into three groups of patterns 13a, 13b, 13c. Each of the three groups of patterns 13a, 13b, 13c is a processing part utilized in the drawing step and generally separated into two types.

Among the groups of patterns 13a, 13b, 13c, the groups of patterns 13a, 13b provided on the both end sections of first peripheral surface in the axial direction of the first rotating roller 11 are movable groups of patterns 13a, 13b that are capable of moving (slide movement) on the first peripheral surface along the CD-direction (i.e., the axial direction of the first rotating roller 11). These movable groups of patterns 13a, 13b correspond to the processing components (more specifically, the movable processing components) of the present invention. The remaining group of patterns 13c, which is different from the above-mentioned two groups of patterns 13a, 13b, is a fixed group of patterns 13c whose position on the first peripheral surface is fixed (i.e., fixed to a roller main body 11a of the first rotating roller 11 and does not perform a sliding movement). This fixed group of patterns 13c corresponds to the fixed processing component, and is situated between the movable groups of patterns 13a, 13b in the CD-direction (in other words, the fixed group of patterns 13c is adjacent to each movable groups of patterns 13a, 13b in the axial direction of the first rotating roller 11).

A plurality of second drawing patterns 14 are arranged along the CD-direction and form a group of patterns. This group of patterns may be, similarly to the group of patterns formed by the first drawing patterns 14, categorized into a movable group of patterns and a fixed group of patterns (the group of pattern whose position on the second peripheral surface is fixed, or may belong to the fixed group of patterns only.

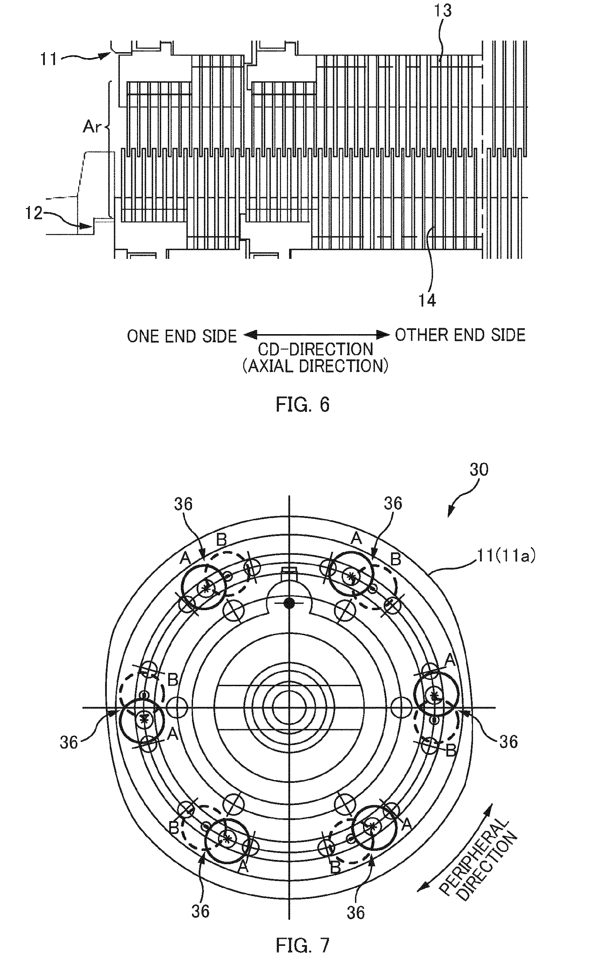

In a space where the first drawing patterns 13 and the second drawing patterns 14 mesh (specifically, the roller gap space Ar), as shown in Fig. 6, the first drawing patterns 13 and the second drawing patterns 14 are alternately arranged in the CD-direction. Fig. 6 is an enlarged view showing how the first drawing patterns 13 and the second drawing patterns 14 are in mesh. Also, as shown in Fig. 6, in the space where the first drawing patterns 13 and the second drawing patterns 14 are meshing with each other, a tip end section of the first drawing pattern 13 and a tip end section of the second drawing pattern 14 are somewhat overlapped in a meshing direction (a direction in which a thickness direction of the sheet member S is directed when passing through the above-mentioned space Ar).

With the configuration described above, when the sheet member S passes between the second rotating roller 12 and the first rotating roller 11 (roller gap space Ar) with the sheet member S being mounted on the second rotating roller 12, while the first rotating roller 11 and the second rotating roller 12 are rotating, the first drawing patterns 13 and the second drawing patterns 14 nip (bite) the sheet member S and come into contact with the sheet member S. In this manner, the first drawing patterns 13 and the second drawing patterns 14 draw the sheet member S along the CD-direction by cooperating with each other.

Further, in the present embodiment, it is possible to adjust an interval of the roller gap space Ar (i.e., an interval between the first peripheral surface and the second peripheral surface), and with the adjustment of the interval, a degree of meshing between the first drawing patterns 13 and the second drawing patterns 14 (a degree of an overlap between the tip end section of the first drawing pattern 13 and the tip end section of the second drawing pattern 14) is adjustable. By changing the degree of meshing of each of the drawing patterns 13, 14, an amount of draw applied to the sheet member S can be varied. Here, the amount of draw is an amount of draw when extending the sheet member S in its width direction during the drawing step, and in other words, it is a degree of deformation (degree of strain) when it is deformed (strained) by a tension exerted on the sheet member S. Adjustment of the interval of the roller gap space Ar will be described in detail below.

Further, as shown in Fig. 5B, heating elements 15 that heat each of the rotating rollers 11, 12 are provided inside the first rotating roller 11 and the second rotating roller 12, respectively. Fig. 5B is a diagram illustrating internal structures of the first rotating roller 11 and the second rotating roller 12. The heating element 15 is an exemplary heating mechanism, and the drawing patterns 13, 14 provided on the peripheral surface of each of the rotating rollers 11, 12 are heated with an amount of heat generated by the heating element 15. Due to the heating of each of the drawing patterns 13, 14, the sheet member S that is passing through the roller gap space Ar is heated and, as a result, plasticity provided in the sheet member S can be exhibited during the drawing. Preferably, a plurality of heating elements 15 are arranged at a regular interval along the peripheral direction so as to be evenly heated in the peripheral direction of each of the rotating rollers 11, 12. Further, the heating element 15 may be provided on at least one of the rotating rollers among the first rotating roller 11 and the second rotating roller 12. Also, when the first rotating roller 11 and the second rotating roller 12 are of small diameters, the heating elements 15 may be arranged at central sections (near the shaft) of the rollers.

### <<Position Adjustment of First Drawing Pattern 13>>

In order to draw the sheet member S with an increased precision with the drawing apparatus 10 of the above-mentioned structure, ideally, a clearance between the first drawing patterns 13 and the second drawing patterns 14 is uniform. However, in practice, a tolerance occurs at steps such as a step of manufacturing the drawing patterns 13, 14, a step of attaching the drawing patterns 13, 14 to each of the rotating rollers 11, 12, a step of assembling the drawing apparatus 10 by assembling the rotating rollers 11, 12 whereto the drawing patterns 13, 14 have been attached. Considering such tolerance, it is required to accurately position the first drawing pattern 13 with respect to the second rotating roller 12 (specifically, the second drawing pattern 14) in the step of assembling the drawing apparatus 10.

In other words, it is required to adjust the position of each of the first drawing patterns 13 (i.e., groups of patterns 13a, 13b, 13c that serve as the processing components) along the CD-direction when assembling the apparatus, in such a manner that the clearance between the drawing patterns 13 and 14 becomes uniform while preventing the drawing patterns 13, 14 from coming into contact with each other. As a method of such position adjustment, it is conceivable to employ a method of performing a thrust movement of the first rotating roller 11 itself on which the first drawing pattern 13 is installed. However, if it is attempted to adjust the position of the first drawing pattern 13 by performing a thrust movement of the first rotating roller 11, a greater force and a longer time is required as compared to a case in which the groups of patterns 13a, 13b, 13c of the first drawing patterns 13 is moved individually. Further, after having performed the position adjustment of the above-mentioned groups of patterns 13a, 13b, 13c, it is necessary to further perform position adjustment of the first rotating roller 11 itself. As a result, the position adjustment becomes troublesome and the work becomes cumbersome.

Accordingly, the drawing apparatus 10 of the present embodiment is provided with a mechanism for achieving a simpler position adjustment (specifically, the position adjustment mechanism 30 described later). In the next section of the specification, such mechanism will be described in detail.

### === Position Adjustment of Present Embodiment ===

The drawing apparatus 10 includes two types of position adjustment mechanisms 30 and 40 to perform position adjustment of the above-mentioned groups of patterns 13a, 13b, 13c.

One position adjustment mechanism 30 corresponds to the adjustment mechanism of the present invention, and adjusts relative positions of the movable groups of patterns 13a, 13b with respect to the first peripheral surface in the CD-direction (i.e., the axial direction of the first rotating roller 11). Hereinafter, the position adjustment mechanism 30 will be referred to as a pattern-side adjustment mechanism 30. The pattern-side adjustment mechanism 30 is provided on each side (at the both end sides in the axial direction) of a roller main body 11a of the first rotating roller 11 (see Fig. 4). In other words, in the present embodiment, there are two pattern-side adjustment mechanisms 30. Among the two pattern-side adjustment mechanisms 30, one pattern-side adjustment mechanism 30 adjusts the above-mentioned relative position of the movable group of patterns 13a on the one end side by moving the movable group of patterns 13a on the one end side in the CD-direction on the first peripheral surface along the CD-direction. The other pattern-side adjustment mechanism 30 adjusts the above-mentioned relative position of the movable group of patterns 13b on the other end side by moving the movable group of patterns 13b on the other end side in the CD-direction on the first peripheral surface along the CD-direction.

The other position adjustment mechanism 40 adjusts the position of the first rotating roller 11 itself in the CD-direction, and hereinafter referred to as a shaft-side adjustment mechanism 40. The shaft-side adjustment mechanism 40 adjusts the position of the first rotating roller 11 in the CD-direction by performing a thrust movement (movement in the CD-direction) of the first rotating roller 11. Then, as the position of the first rotating roller 11 is adjusted, positions (positions in the CD-direction) of the groups of patterns 13a, 13b, 13c of the first drawing patterns 13 are adjusted.

It is to be noted that the above-mentioned position adjustment mechanisms 30, 40 perform position adjustment of the groups of patterns 13a, 13b, 13c constituted by the first drawing patterns 13, but a similar position adjustment mechanism may be provided to perform position adjustment of the group of patterns comprised of the second drawing patterns 14. In other words, when the group of patterns comprised of the second drawing patterns 14 is divided into the movable group of patterns and the fixed group of patterns, the relative position of the movable group of patterns may be adjusted by the position adjustment mechanism corresponding to the pattern-side adjustment mechanism 30 and the position of the group of patterns comprised of the second drawing patterns 14 may be adjusted by performing a thrust movement of the second rotating roller 12 by the position adjustment mechanism corresponding to the shaft-side adjustment mechanism 40. In the present embodiment, in order to facilitate the explanation, it is assumed that the above-mentioned position adjustment mechanisms 30 and 40 are provided to perform position adjustment of only the groups of patterns 13a, 13b, 13c comprised of the first drawing patterns 13.

Configuration of each position adjustment mechanism 30 and 40 will be described in detail below.

### <<Configuration of Pattern-side Adjustment Mechanism 30>>

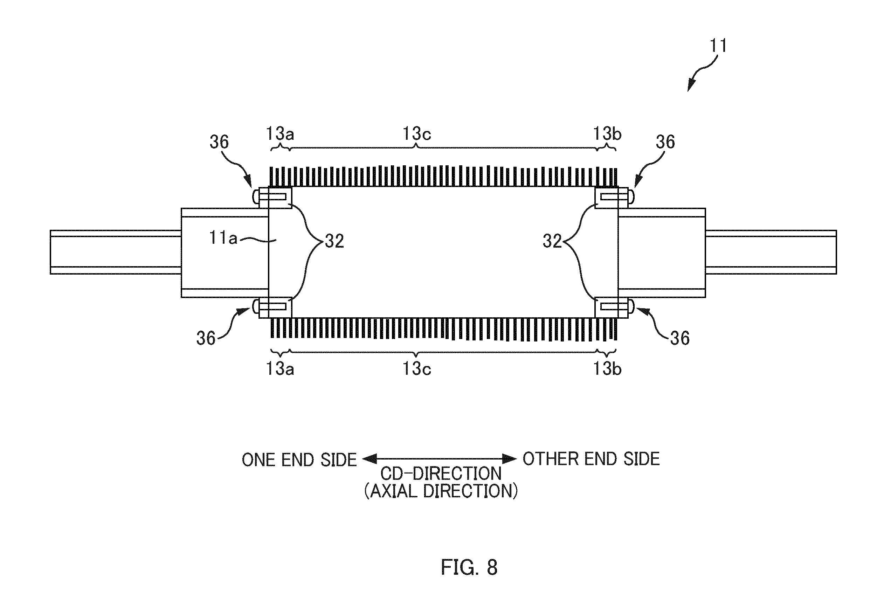

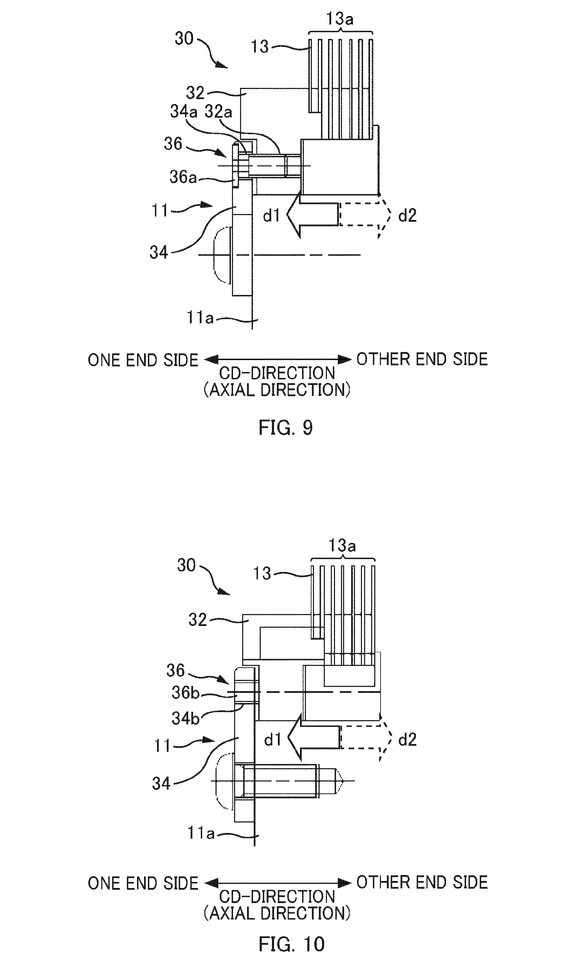

First, the pattern-side adjustment mechanism 30 will be described with reference to Figs. 7 to 10. Figs. 7 to 10 are explanatory diagrams of the pattern-side adjustment mechanism 30. Fig. 7 is a side view of the roller main body 11a of the first rotating roller 11. Fig. 8 is a cross-sectional view of the roller main body 11a of the first rotating roller 11. Fig. 9 is a cross-sectional view of a portion indicated with a reference character A in Fig. 7. Fig. 10 is a cross-sectional view of a portion indicated with a reference character B in Fig. 7.

As has been described above, there are two pattern-side adjustment mechanisms 30, each being provided at a side of the roller main body 11a of the first rotating roller 11. Since the two pattern-side adjustment mechanisms 30 have a symmetrical structure for the one end side and the other end side in the CD-direction, the pattern-side adjustment mechanism 30 on the one end side in the CD-direction will be described in the following description.

Each group of patterns 13a, 13b, 13c comprised of the first drawing patterns 13 is attached to a base. Among these, the movable groups of patterns 13a, 13b are attached on a peripheral surface of a substantially ring-like movable base 32, which is formed as a separate body from the roller main body 11a (see Fig. 8). The movable base 32 is fitted to an end section in the axial direction of the roller main body 11a of the first rotating roller 11 and is slidable on the roller main body 11a along the CD-direction. With the sliding of the movable base 32 on roller main body 11a in the CD-direction, the movable groups of patterns 13a, 13b move on the first peripheral surface along the CD-direction.

The fixed group of pattern 13c is directly attached to the roller main body 11a of the first rotating roller 11 (see Fig. 8). That is to say, the roller main body 11a itself serves as the attachment base to the fixed group of pattern 13c. However, it is not limited thereto, and the attachment base of the fixed group of pattern 13c may be formed as a separate body from the roller main body 11a and detachably fixed to the roller main body 11a. In any case, the fixed group of pattern 13c is attached to the roller main body 11a in an immovable manner.

The pattern-side adjustment mechanism 30 is made of a plurality of members including the above-mentioned movable base 32. To be more specific, in addition to the movable base 32, the pattern-side adjustment mechanism 30 has a restricting plate 34 (see Figs. 9 and 10) and an adjustment unit 36 (see Fig. 7).

The restricting plate 34 is a disk-like member joined to an axial-direction end surface of the roller main body 11a of the first rotating roller 11 and has an external diameter that is somewhat greater than an external diameter of the roller main body 11a. This restricting plate 34 restricts the movable base 32 from falling off from the roller main body 11a when the movable base 32 moves to an outer side (one end side) along the CD-direction. It is to be noted that, in the axial direction of the first rotating roller 11, a gap is formed between the restricting plate 34 and the fixed group of patterns 13a fixed to the roller main body 11a, and the movable base 32 is arranged in this gap. This gap is provided so as to ensure that the movable base 32 is reciprocable along the CD-direction.

The adjustment unit 36 is a portion that is actually operated by the operator when performing the position adjustment of the movable groups of patterns 13a, 13b. In the present embodiment, a plurality of adjustment units 36 are provided at regular angular intervals in the peripheral direction (see Fig. 7) such that amounts of position adjustment of the movable groups of patterns 13a, 13b are substantially uniform along the peripheral direction of the first rotating roller 11. Each adjustment unit 36 has a pulling screw 36a illustrated in Fig. 9 and a pressing screw 36b illustrated in Fig. 10.

The pulling screw 36a passes through a through hole 34a provided in the restricting plate 34 and fits into a screw hole 32a provided in the movable base 32 (see Fig. 9). The pressing screw 36b is fitted into a fitting hole 34b provided in the restricting plate 34 (see Fig. 10). Hereinafter, behaviors that occur due to the operation of the pulling screw 36a and the pressing screw 36b will be described. In the description below, among the two directions which are in opposite directions to each other along the CD-direction (in other words, the axial direction of the first rotating roller 11), one directions will be referred to as a first direction d1 and the other direction will be referred to as a second direction d2. Here, the first direction d1 is a direction oriented from the movable group of patterns 13a to an end nearer to the movable group of patterns 13a among the two ends of the first rotating roller 11 in the CD-direction and the second direction d2 is a direction oriented from the movable group of patterns 13a to an end on a farther side (i.e., the other end in the CD-direction (see Figs. 9 and 10).

When being screwed in, the pulling screw 36a pulls in the movable base 32 and the movable group of patterns 13a in the first direction d1 with a screw head section of the pulling screw 36a being engaged to the restricting plate 34. When screwing in, the pressing screw 36b presses the movable base 32 and the movable group of patterns 13a in the second direction d2 while pressing a tip end of the pressing screw 36b against a side surface of the movable base 32. With the structure described above, for example, when the pattern-side adjustment mechanism 30 moves the movable base 32 and the movable group of patterns 13a in the first direction d1, the pressing screw 36b is screwed after having screwed the pulling screw 36a. In other words, after having moved the movable base 32 and the movable group of patterns 13a in the first direction d1 by the pulling screw 36a, in order to suppress the backlash of the movable base 32 (backlash in the CD-direction), the movable base 32 and the movable group of patterns 13a are pressed in the second direction d2 by the pressing screw 36b. In this manner, as a result of a balance between a pulling force by the pulling screw 36a and the pressing force by the pressing screw 36b, the movable base 32 and the movable group of patterns 13a can be securely positioned at positions after the movement.

Similarly, in a case where the pattern-side adjustment mechanism 30 moves the movable base 32 and the movable group of patterns 13a in the second direction d2, the pulling screw 36a is screwed after having screwed the pressing screw 36b. In other words, after having moved the movable base 32 and the movable group of patterns 13a in the second direction d2 by the pressing screw 36b, in order to suppress backlash of the movable base 32, the movable base 32 and the movable group of patterns 13a are pulled in the first direction d1 by the pulling screw 36a. As a result, the movable base 32 and the movable group of patterns 13a are securely positioned at positions after the movement.

As has been described above, in the present embodiment, the relative position of the movable group of patterns 13a with respect to the first peripheral surface can be adjusted with a relatively simple mechanism. In other words, the above-mentioned adjustment of the relative position can be performed simply by operating the pulling screw 36a and the pressing screw 36b.

In the present embodiment, in order to adjust the relative position of the movable group of patterns 13a with respect to the first peripheral surface, the movable group of patterns 13a can be moved as a single body without moving the first rotating roller 11. Accordingly, a simple position adjustment can be achieved and thus the clearance between each of the first drawing patterns 13 and the second drawing patterns 14 constituting the movable group of patterns 13a can be made appropriate in a facilitated manner.

### <<Shaft-side Adjustment Mechanism 40>>

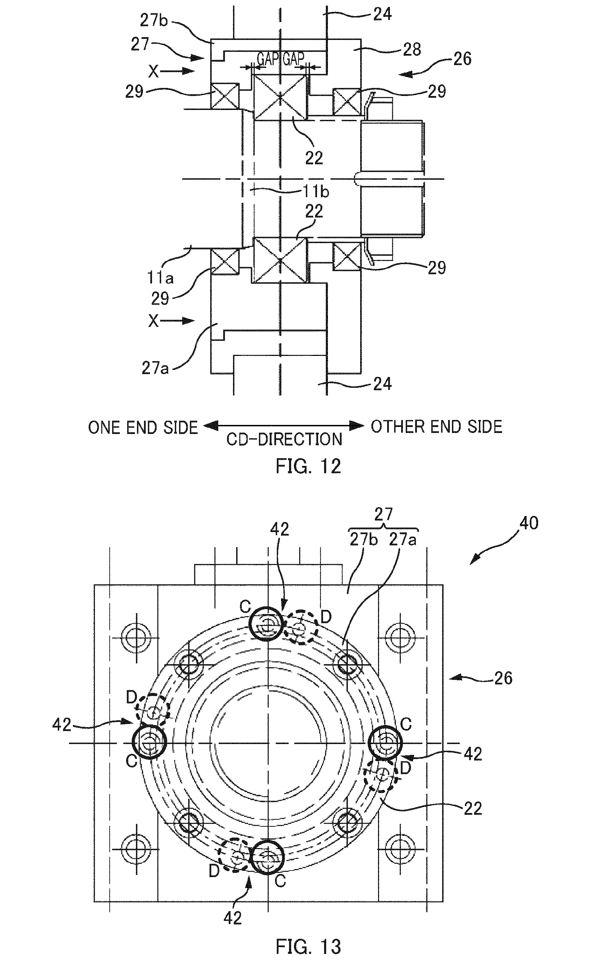

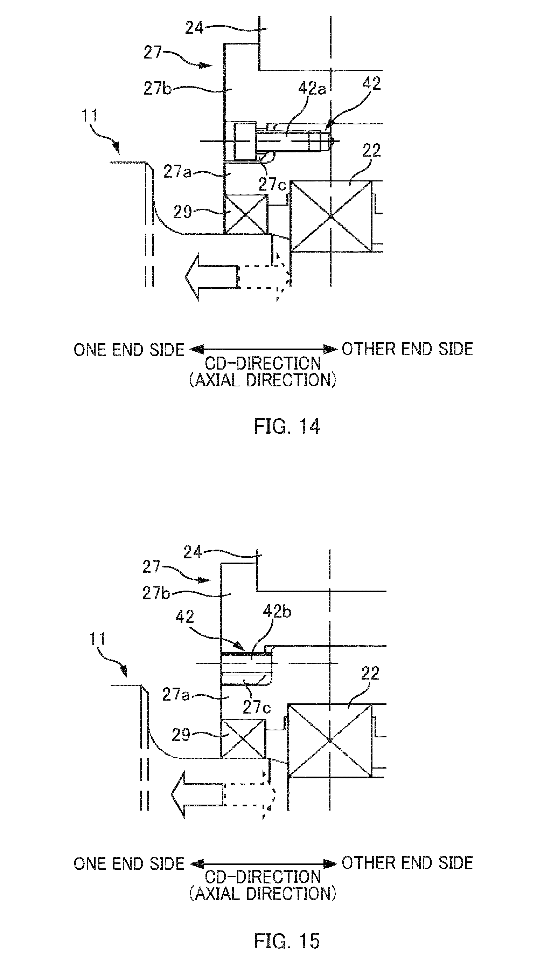

Next, the shaft-side adjustment mechanism 40 will be described with reference to Figs. 11 to 15. Figs. 11 to 15 are explanatory diagrams of the shaft-side adjustment mechanism 40. Fig. 11 is a diagram illustrating respective cross-sections of the first rotating roller 11, the bearing 22 and a casing 26 to be described later. Fig. 12 is a diagram showing a region near the bearing 22 in Fig. 11 in an enlarged view. Fig. 13 is a side view of the casing 26 (seen in a direction of arrows X in Fig. 12). Fig. 14 is a cross sectional view of a portion accompanied by reference character C in Fig. 13. Fig. 15 is a cross sectional view of a portion accompanied by reference character D in Fig. 13.

Among the groups of patterns 13a, 13b, 13c comprised of the first drawing patterns 13, position adjustment of the movable patterns 13a and 13b can be performed as a single body by the above-mentioned pattern-side adjustment mechanism 30. To the contrary, it is difficult to perform position adjustment of the fixed group of patterns 13c as a single body since it is fixed to the roller main body 11a of the first rotating roller 11 and located between the movable groups of patterns 13a and 13b in the axial direction of the first rotating roller 11. Therefore, the position adjustment of the fixed group of patterns 13c will be performed by adjusting the position of the first rotating roller 11 by performing a thrust movement (movement in the CD-direction) of the first rotating roller 11 itself. The shaft-side adjustment mechanism 40 is provided to achieve such adjustment.

In the present embodiment, as has been described above, both end sections (shaft sections) in the axial direction of the first rotating roller 11 are supported by a frame 24 via the bearings 22, respectively (see Fig. 11). The bearing 22 is accommodated in the casing 26 (a so-called bearing chock) on the frame 24. This casing 26 is formed of a first frame body 27 and a second frame 28 (see Fig. 12). Further, the first frame body 27 is divided into an inner frame section 27a located at an inner side in the radial direction of the first rotating roller 11 and an outer frame section 27b located at an outer side thereof (see Figs. 14 and 15) .

The inner frame section 27a of first frame body 27 and the second frame body 28 are arranged in an opposing manner with a gap between them in the CD-direction and the bearing 22 is caught in the gap (see Fig. 12). The outer frame section 27b of the first frame body 27 is supported by the frame 24 and, at an inner side thereof, the inner frame section 27a is fitted so as to be slidable in the CD-direction. Also, an engagement protrusion 27c protrudes from each end section of the inner peripheral surface of the outer frame section 27b, and this engagement protrusion 27c prevents the inner frame section 27a from falling off from the outer frame section 27b when sliding in the CD-direction. The inner frame section 27a slides on the inner peripheral surface of the outer frame section 27b along the CD-direction while being restricted by the engagement protrusions 27c.

Also, in the present embodiment, the inner frame section 27a has an annular shape and is fitted in a fitting hole (not shown) that is formed in the outer frame section 27b, but a rotation prevention process may be applied on a contact surface between the frame sections 27a and 27b in such a manner that the inner frame section 27a does not rotated relatively with respect to the outer frame section 27b.

In the structure described above, the shaft-side adjustment mechanism 40 causes the inner frame section 27a to move in the CD-direction with the adjustment unit 42 (see Fig. 13), which has a substantially similar configuration as the adjustment unit 36 of the pattern-side adjustment mechanism 30, and thus causes the bearing 22 to move in the CD-direction, and further causes the first rotating roller 11, on which the bearing 22 is fitted, in its axial direction. Thus, the position of the first rotating roller 11 will be adjusted in its axial direction. That is to say, the adjustment unit 42 of the shaft-side adjustment mechanism 40 also has the pulling screw 42a illustrated in Fig. 14 and the pressing screw 42b illustrated in Fig. 15, and the inner frame section 27a moves by an operation of both of the screws 42a and 42b, and thus the movement and the positioning of the first rotating roller 11 are performed.

It is to be noted that, as shown in Fig. 13, a plurality of adjustment units 42 are provided at regular angular intervals in the peripheral direction such that an amount of movement (amount of position adjustment) of the first rotating roller 11 is made uniform along the peripheral direction of the first rotating roller 11.

In a case where the shaft-side adjustment mechanism 40 of the above-mentioned structure is provided on at least one end side among the both ends in the axial direction of the first rotating roller 11, the position of the first rotating roller 11 can be adjusted. For example, if the shaft-side adjustment mechanism 40 is provided on both end sides in the axial direction of the first rotating roller 11, respectively, finer position adjustment can be performed. Alternatively, the shaft-side adjustment mechanism 40 may be provided on only one end side in the axial direction (or the other end side in the axial direction) of the first rotating roller 11. Even with such configuration, position adjustment of the first rotating roller 11 can be performed if a so-called escape is provided at a side of an end (hereinafter, also referred to as a fixed side), among both ends in the axial direction of the first rotating roller 11, opposite to a side of an end (hereinafter, also referred to as a movable side) where the shaft-side adjustment mechanism 40 is provided. Stating more simply, in a case of moving the bearing 22 on the movable side in the CD-direction by the shaft-side adjustment mechanism 40, if it is possible to move the bearing 22 on the fixed side with a displacement (an amount of escape) which is the same as a displacement of the bearing 22 on the movable side, the first rotating roller 11 can be slid and the position of the first rotating roller 11 is adjusted.

It is to be noted that a space in which the bearing 22 moves in the CD-direction (specifically, a gap formed between the inner frame section 27a of the first frame body 27 and the second frame body 28) can be ensured in the casings 26 on both the movable side and the fixed side, or, may be ensured only in the casing 26 of the movable side.

In the casing 26, as shown in Fig. 12, a friction sliding member 29 is provided which seals the gap between the first rotating roller 11 and the casing 26 at a position on an outer side of the bearing 22 in CD-direction. This friction sliding member 29 is a seal member and rubs against the first rotating roller 11 when the first rotating roller 11 is rotating. In the present embodiment, the size and the shape of each portion of the casing 26 are designed such that a boundary section 11b between the roller main body 11a of the first rotating roller 11 and the shaft section does not interfere with the friction sliding member 29 when adjusting the position of the first rotating roller 11. This is because, as shown in Fig. 12, the above-mentioned boundary section 11b is a section where an external diameter thereof gradually changes, and when the friction sliding member 29 that was initially in contact with the roller main body 11a comes to the boundary section 11b due to the position adjustment of the first rotating roller 11, the gap between the first rotating roller 11 and the casing 26 will not be sealed (the friction sliding member 29 loses its function as a seal member).

### <<Adjustment of Interval of Roller Gap Space Ar>>

In the present embodiment, in addition to the position adjustment of the groups of patterns 13a, 13b, 13c, it is also possible to adjust the interval of the roller gap space Ar.

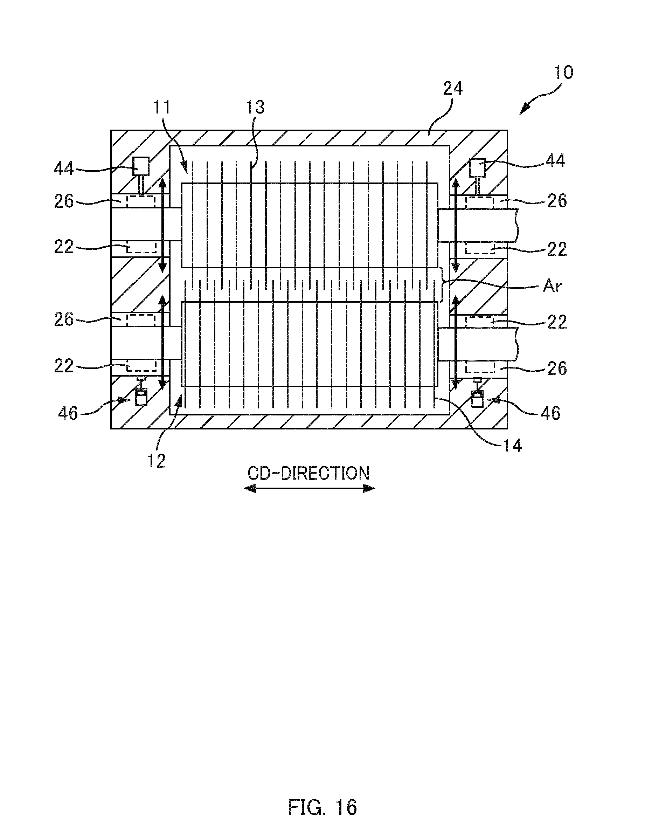

Specifically, the first rotating roller 11 is supported in such a state that its peripheral surface (first peripheral surface) can move towards and away from the peripheral surface (second peripheral surface) of the second rotating roller 12. To be more specific, as shown in Fig. 16, the casing 26 that accommodates the bearing 22 provided on the first rotating roller 11 side can move in directions of arrows in the Figure by an actuator (includes a simple feed screw type) 44 while being supported by the frame 24. Consequently, the first rotating roller 11 moves in such a manner that the first peripheral surface moves towards and away from second peripheral surface. Fig. 16 is an explanatory diagram of a mechanism that adjusts the interval of the roller gap space Ar. Similarly, the second rotating roller 12 is also supported in such a state that the second peripheral surface can move towards and away from the first peripheral surface. Specifically, the casing 26 that accommodates the bearing 22 provided on the second rotating roller 12 side is capable of moving in directions of arrows in Fig. 16 by the hydraulic or pneumatic driving mechanism 46 while being supported by the frame 24. Consequently, the second rotating roller 11 moves such that second peripheral surface moves towards and away from the first peripheral surface.

As has been described above, in the present embodiment, the first rotating roller 11 and the second rotating roller 12 are both supported in such a state that the interval between the first peripheral surface and the second peripheral surface (i.e., the interval of the roller gap space Ar) can vary. However, it is not limited thereto, and among the first rotating roller 11 and the second rotating roller 12, at least one of the rotating rollers needs to be supported in a movable manner such that the above-mentioned interval can vary.

It is to be noted that an operation of varying the above-mentioned interval by moving the first rotating roller 11 by the actuator 44 is performed, for example, for changing an amount of draw applied to the sheet member S. On the other hand, an operation of varying the above-mentioned interval by moving the second rotating roller 12 by the above-mentioned driving mechanism 46 is performed, for example, for broadening the interval and for facilitating the passage of the sheet member S when passing the sheet member S between the rotating rollers 11 and 12 at the time of setting the drawing apparatus 10 (when preparing for the restart of the drawing apparatus 10 after the maintenance of the apparatus).

### === Assembling Procedure of the Drawing Apparatus 10 ===

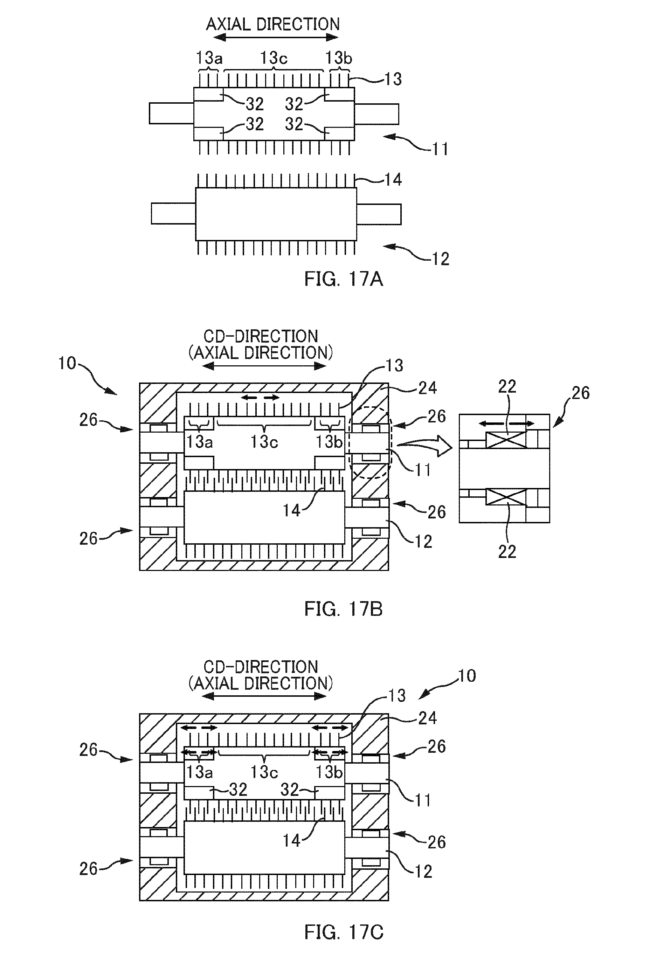

Based on the structure described above, the procedure of assembling the drawing apparatus 10 will be described. The assembling of the drawing apparatus 10 is, of course, performed before the drawing step by the drawing apparatus 10. The assembling is performed by the procedure shown in Figs. 17A to 17C. Figs. 17A to 17C are diagrams showing the assembling procedure of the drawing apparatus 10. It is to be noted that in Figs. 17A to 17C, each sections of the drawing apparatus 10 is illustrated in a simplified manner and, for example, number of first drawing patterns 13 constituting the groups of patterns 13a, 13b, 13c is less than the actual number.

In the assembling, first, the first rotating roller 11 and the second rotating roller 12 in a state illustrated in Fig. 17A are prepared. That is to say, already at the preparation step, the groups of patterns 13a, 13b, 13c comprised of the plurality of first drawing patterns 13 are provided on the first peripheral surface of the first rotating roller 11 (in other words, the movable base 32 whereto the movable groups of patterns 13a, 13b are attached is fitted to the roller main body 11a of the first rotating roller 11). Similarly, a group of patterns comprised of the plurality of second drawing patterns 14 is provided on the second peripheral surface of the second rotating roller 12.

Next, as shown in Fig. 17B, each of the first rotating roller 11 and the second rotating roller 12 is supported by the frame 24 via the bearing 22. At this time, each of the first rotating roller 11 and the second rotating roller 12 is supported by the frame 24 in such a manner that the plurality of first drawing patterns 13 and the plurality of second drawing patterns 14 mesh with each other in the roller gap space Ar.

Thereafter, by performing a thrust movement of the first rotating roller 11 with the shaft-side adjustment mechanism 40, the position of the first rotating roller 11 in the CD-direction (the axial direction of the first rotating roller 11) is adjusted and positioned at a position after adjustment (see Fig. 17B). Thus, the positions in the CD-direction of the groups of patterns 13a, 13b, 13c provided on the first peripheral surface of the first rotating roller 11 are adjusted. As a result, first, a clearance between the first drawing patterns 13, which are constituting the fixed group of patterns 13c (the fixed processing component) among the groups of patterns 13a, 13b, 13c, and the second drawing patterns 14, which are meshing thereto, will be adjusted.

After the position adjustment of the first rotating roller 11, the movable groups of patterns 13a, 13b (the movable processing components) among the groups of patterns 13a, 13b, 13c are moved on the first peripheral surface in the CD-direction with the pattern-side adjustment mechanism 30 and positioned at the positions after the movement (see Fig. 17C). Thus, the relative positions of the movable patterns 13a, 13b against the first peripheral surface will be adjusted. As a result, a clearing between the first drawing patterns 13 constituting the movable patterns 13a, 13b and the second drawing patterns 14 meshing therewith will be adjusted.

Further, in the present embodiment, as has been described above, the pattern-side adjustment mechanism 30 is individually provided for each of the two movable patterns 13a and 13b. Therefore, in the present embodiment, adjustment of the relative position can be individually performed for each of the two movable patterns 13a and 13b. Specifically, with one pattern-side adjustment mechanism 30, the movable group of patterns 13a on one end side in the CD-direction is moved on the first peripheral surface along the CD-direction and the relative position of the movable group of patterns 13a on one end side in the CD-direction is adjusted. Further, with the other pattern-side adjustment mechanism 30, the movable group of patterns 13b on the other end side in the CD-direction is moved on the first peripheral surface along the CD-direction and the relative position of the movable group of patterns 13b on the other end side in the CD-direction is adjusted.

In this manner, in the present embodiment, since two pattern-side adjustment mechanisms 30 are provided, individual adjustment of the relative position of each of the two movable groups of patterns 13a, 13b can be performed in a facilitated manner.

With the procedure described above, position adjustment for each of the movable groups of patterns 13a, 13b, as well as, the fixed group of patterns 13c can be performed with an increased accuracy in such a manner that a clearance between the first drawing patterns 13 and the second drawing patterns 14 becomes uniform.

When the drawing apparatus 10 is operated after having performed position adjustment for each group of patterns 13a, 13b, 13c, the heating element 15 provided inside each rotating roller 11, 12 will generate heat and each rotating roller 11, 12 will be heated. Thus, each heated rotating rollers 11, 12 thermally expands along the axial direction, and particularly, the axial-direction end portions of each rotating roller 11, 12 will be situated at positions somewhat offset from the initial position along the axial direction (positions before the operation of the apparatus). As a result, even if the clearance between the first drawing patterns 13 and the second drawing patterns 14 is appropriately adjusted by performing position adjustment before operating the apparatus, such clearance will change again during the operation of the apparatus. With such a change in the clearance, the drawing patterns 13 and 14 that were originally arranged with an appropriate clearance between them will be too close to (or too spaced apart from) each other.

On the other hand, according to the configuration of the present invention, even if the above-mentioned clearance changes during the operation of the apparatus, position adjustment for readjusting the clearance can be performed in a simple manner. In other words, since position adjustment of the groups of patterns 13a, 13b (the movable groups of patterns 13a, 13b) arranged at end sections in the axial direction of each rotating rollers 11, 12 which are significantly affected by thermal expansion can be performed in a simplified manner with the pattern-side adjustment mechanism 30, even if there is a change of the above-mentioned clearance during the operation of the apparatus, such a situation can be handled by temporarily stopping the drawing apparatus 10 and performing position adjustment of the pattern-side adjustment mechanism 30 again. As has been described above, with a structure in which the first rotating roller 11 or the second rotating roller 12 is heated, the effect of the invention will be more meaningful.

### === Variants of Drawing Apparatus 10 ===

The above-mentioned structure of the drawing apparatus 10 (hereinafter referred to as the present example) is shown by way of example only, and other structures are also conceivable. In relation to the drawing apparatus 10 of other structures, the drawing apparatus 10 of a first variant and the drawing apparatus 10 of a second variant will be described below.

### <<First Variant>>

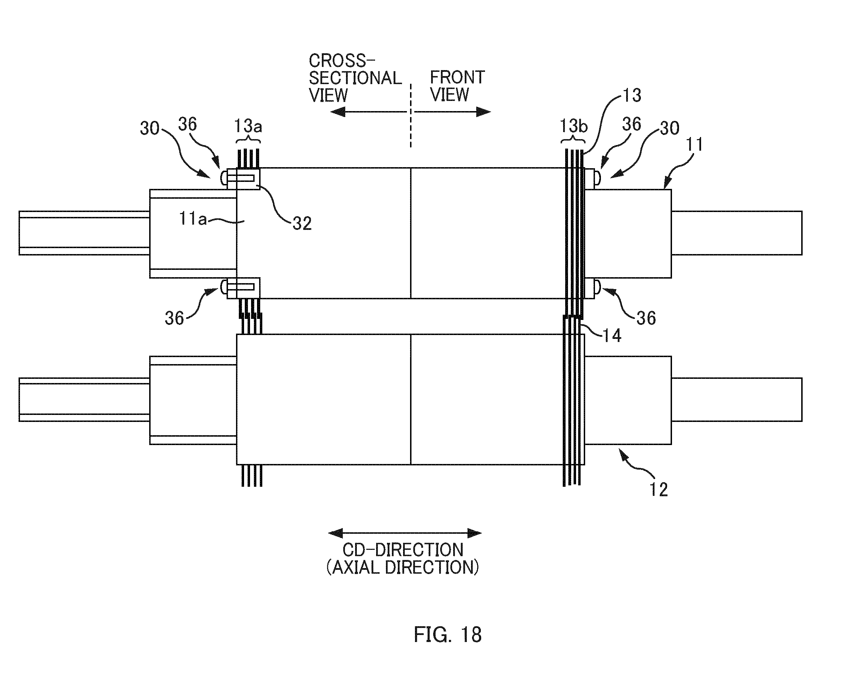

According to the first variant, as shown in Fig. 18, the groups of patterns are arranged only at both end sections in the axial direction of the first rotating roller 11 and the second rotating roller 12, and there is no group of patterns arranged at the central section in the axial direction. Fig. 18 is a diagram illustrating the drawing apparatus 10 of the first variant and, in the Figure, the right hand side view is a front view and the left hand side view is a cross-sectional view.

To be more specific, the groups of patterns 13a, 13b comprised of a plurality of first drawing patterns 13 are provided at both end sections in the axial direction on the first peripheral surface of the first rotating roller 11, and such groups of patterns 13a, 13b belong to the movable groups of patterns 13a, 13b. In other words, in the first variant, a group of patterns belonging to the fixed group of patterns 13c of the present example is not provided. Therefore, in the first variant, a mechanism (shaft-side adjustment mechanism 40) that performs thrust movement of the first rotating roller 11 to perform position adjustment of the fixed group of patterns 13c is not provided. Concerning the aspects described above, the first variant and the present example differ.

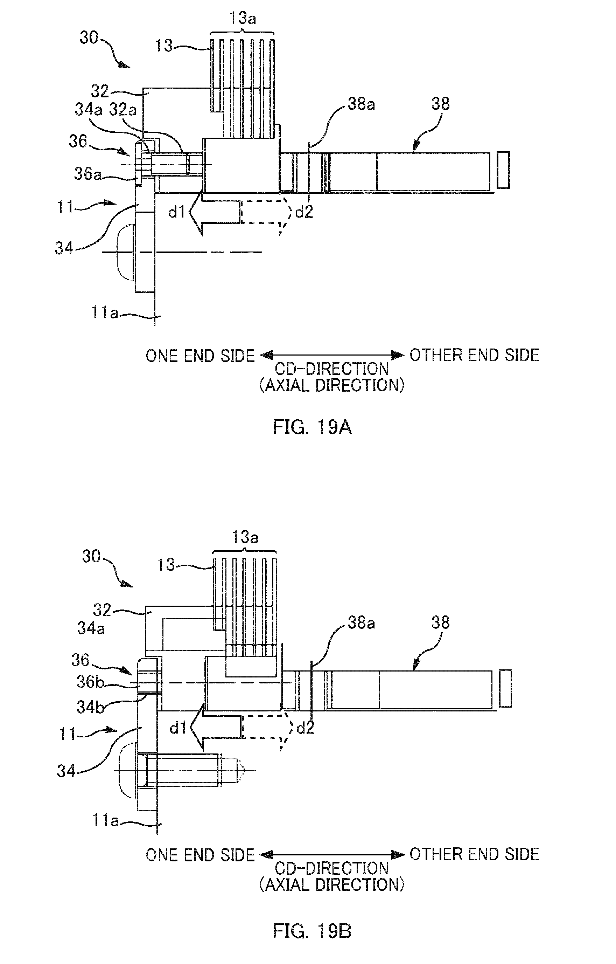

Further, as shown in Figs. 19A and 19B, the pattern-side adjustment mechanism 30 of the first variant includes the movable base 32, the restricting plate 34 and the adjustment unit 36, and further includes a cylindrical member 38 having a cylindrical shape. Figs. 19A and 19B are diagrams illustrating the pattern-side adjustment mechanism 30 of the first variant.

The cylindrical member 38 is fitted to the first rotating roller 11 and is adjacent to the movable base 32 at a position on the inner side of the movable base 32 in the axial direction of the first rotating roller 11. The cylindrical member 38 moves together with the movable base 32 when the movable base 32 moves by the adjustment unit 36 along the CD-direction and, after the movement, fixed to the roller main body 11a of the first rotating roller 11 by a set screw 38a. At this time, the movable base 32 is positioned at the position after adjustment by the adjustment unit 36, and the cylindrical member 38 is also positioned while maintaining a state of being in contact with the movable base 38. Thus, backlash of the movable base 32 (backlash in the CD-direction) can be further suppressed and positioning of the movable base 32 can be performed in a more secure manner. It is to be noted that the cylindrical member 38 can be dispensed with.

The first variant has a similar structure to the present example except for the structural differences described above and has a similar effect as the present example. For example, the first variant also discloses that the pattern-side adjustment mechanisms 30 are individually provided for the two movable patterns 13a, 13b, respectively. One pattern-side adjustment mechanism 30 adjusts the relative position of the movable group of patterns 13a on one end side in the CD-direction by moving the movable group of patterns 13a on the one end side in the CD-direction on the first peripheral surface along the CD-direction, and the other pattern-side adjustment mechanism 30 adjusts the relative position of the movable group of patterns 13b on the other end side in the CD-direction by moving the movable group of patterns 13b on the other end side in the CD-direction on the first peripheral surface along the CD-direction. Thus, individual adjustment of the relative positions can be performed respectively for the two movable groups of patterns 13a and 13b.

Also, although not shown in the drawings, a case in which a single movable pattern 13a is provided on the first peripheral surface of the first rotating roller 11 is also conceivable (in other words, a case in which every one of the plurality of first drawing patterns 13 provided on the first peripheral surface belongs to the movable group of patterns 13a). Even in such a case, adjustment of the relative position of the movable pattern 13a can be performed in a simplified manner by providing the pattern-side adjustment mechanism 30.

### <<Second Variant>>

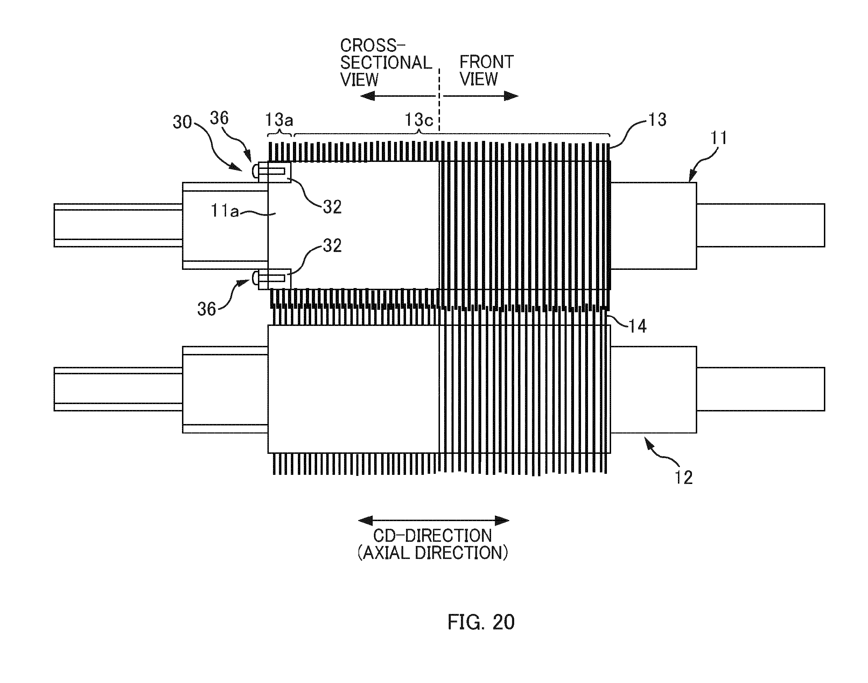

As shown in Fig. 20, in the second variant, the groups of patterns of the first drawing patterns 13 provided on the first peripheral surface of the first rotating roller 11 are divided into two groups of patterns 13a and 13c, and one group of patterns 13a belongs to the movable group of patterns 13a and the other group of patterns 13c belongs to the fixed group of patterns 13c. Fig. 20 is a diagram illustrating the drawing apparatus 10 of the second variant and, in the Figure, the right hand side view is a front view and the left hand side view is a cross-sectional view.

In other words, in the second variant, a single movable group of patterns 13a is arranged at a one-end section in the CD-direction of the first peripheral surface and the fixed group of patterns 13c is arranged on the other end section in the CD-direction and adjacent to the movable group of patterns 13a. Therefore, only one mechanism (pattern-side adjustment mechanism 30) is provided that performs the position adjustment of the movable group of patterns 13a. Concerning the aspects described above, the second variant and the present example differ.

Other than the aspects described above, the second variant has a substantially similar structure with the present example and has an effect similar to that of the present example. For example, the second variant also discloses that the pattern-side adjustment mechanism 30 and the shaft-side adjustment mechanism 40 are provided, and in the assembling operation of the drawing apparatus 10, the movable group of patterns 13a is moved on the first peripheral surface along CD-direction by the pattern-side adjustment mechanism 30 after having performed the thrust movement of the first rotating roller 11 by the shaft-side adjustment mechanism 40. In other words, position adjustment of the fixed group of patterns 13c that cannot be handled with the pattern-side adjustment mechanism 30 is carried out by the shaft-side adjustment mechanism 40 by performing thrust movement of the first rotating roller 11, and thereafter, position adjustment of the movable group of patterns 13a is carried out by the pattern-side adjustment mechanism 30 by moving the movable group of patterns 13a on the first peripheral surface along the CD-direction. As a result, the respective position adjustments of the movable group of patterns 13a and the fixed group of patterns 13b can be performed with an increased accuracy.

### === Other Embodiments ===

The above-mentioned embodiment was mainly described with reference to the drawing apparatus 10 and the method of drawing the sheet member S of the present invention, however, the above-mentioned embodiment is simply for facilitating the understanding of the present invention and are not in any way to be construed as limiting the present invention. The present invention may be variously modified or altered without departing from its spirit and encompass equivalents thereof. Also, the above-mentioned setting values, dimensional values and shapes, etc., are solely indicated by way of example for achieving the effect of the invention and not in any way to be construed as limiting the present invention.

Particularly, the above-mentioned pattern-side adjustment mechanism 30 is an exemplary adjustment mechanism of the present invention, and may be utilized without limitation as long as the relative positions of the movable groups of patterns 13a, 13b can be adjusted by moving the movable groups of patterns 13a, 13b on the first peripheral surface along the axial direction of the first rotating roller 11.

Further, in the above-mentioned embodiment, the mounting member on which the sheet member S is mounted is the second rotating roller 12, but it is not limited thereto and may be, for example, a plate on which protrusions and depressions are formed on a surface opposing the first rotating roller 11. The protrusions of such plate and the first drawing pattern 13 provided on the first rotating roller 11 may mesh with each other and bite and draw the sheet member S by the protrusions and the first drawing pattern 13.

Further, in the above-mentioned embodiment, the drawing apparatus 10 which is an exemplary processing apparatus and a drawing process method is an exemplary method of processing the sheet member S have been described, respectively. In other words, in the embodiment described above, the groups of patterns 13a, 13b comprised of patterns for a drawing process (the first drawing patterns 13) are described as an exemplary processing component, but it is not limited thereto. For example, the present invention may also be applied to a processing apparatus (i.e., a cutting apparatus) and a processing method (i.e., a method of cutting the sheet member S) in which a cutter that cuts the sheet member S by coming into the sheet member S is the processing component.

### Reference Signs List

1 diaper (absorbent article), 1a exterior, 1b absorbent body,
10 drawing apparatus (processing apparatus),
11 first rotating roller (rotating roller),
11a roller main body, 11b boundary section,
12 second rotating roller (mounting member),
13 first drawing pattern,
13a movable group of patterns (processing component, movable processing component),
13b movable group of patterns (processing component, movable processing component),
13c fixed group of patterns (fixed processing component),
14 second drawing pattern, 15 heating element, 22 bearing, 24 frame,
26 casing, 27 first frame body, 27a inner frame section,
27b outer frame section, 27c engagement protrusion,
28 second frame body, 29 friction sliding member,
30 pattern-side adjustment mechanism (adjustment mechanism),
32 movable base, 32a screw hole, 34 restricting plate,
34a through hole, 34b fitting hole, 36 adjustment unit,
36a pulling screw, 36b pressing screw,
38 cylindrical member, 38a set screw,
40 shaft-side adjustment mechanism, 42 adjustment unit,
42a pulling screw, 42b pressing screw, 44 actuator,
46 driving mechanism, Ar roller gap space, S sheet member

## Claims

1. A processing apparatus that processes a sheet member used in manufacturing an absorbent article, comprising:
a mounting member on which the sheet member is mounted;
a rotating roller that rotates with a peripheral surface thereof opposing the mounting member;
a processing component that is provided on the peripheral surface and movable on the peripheral surface along an axial direction of the rotating roller; and
an adjustment mechanism that adjusts a relative position of the processing component with respect to the peripheral surface in the axial direction,
the processing component processing the sheet member by coming into contact with the sheet member with the rotating roller being rotated, while the sheet member is passing between the mounting member and the rotating roller with the sheet member being mounted on the mounting member,
the adjustment mechanism adjusting the relative position by moving the processing component on the peripheral surface along the axial direction.

2. An processing apparatus according to claim 1, wherein
the processing component is provided at each end section of the peripheral surface in the axial direction,
two such adjustment mechanisms being provided,
among the two adjustment mechanisms, one adjustment mechanism adjusts the relative position of the processing component on one end side in the axial direction by moving the processing component on one end side on the peripheral surface along the axial direction, and
the other adjustment mechanism adjusts the relative position of the processing component on the other end side in the axial direction by moving the processing component on the other end side on the peripheral surface along the axial direction.

3. An processing apparatus according to claim 1, wherein
the processing component is a movable processing component, the processing apparatus further comprising:
a fixed processing component provided on the peripheral surface, a position of the fixed processing component being fixed on the peripheral surface; and
a shaft-side adjustment mechanism that adjusts a position of the rotating roller in the axial direction,
the movable processing component being adjacent to the fixed processing component in the axial direction,
the shaft-side adjustment mechanism adjusting the position of the rotating roller in the axial direction by moving the rotating roller in the axial direction.

4. An processing apparatus according to one of claims 2 and 3, wherein
the processing component is a movable processing component arranged at each end section of the peripheral surface in the axial direction,
the processing apparatus further comprising:
a fixed processing component provided on the peripheral surface, a position of the fixed processing component being fixed on the peripheral surface; and
a shaft-side adjustment mechanism that adjusts a position of the rotating roller along in the axial direction,
the fixed processing component being situated between the movable processing components in the axial direction,
wherein,
two such adjustment mechanisms are provided,
among the two adjustment mechanisms, one adjustment mechanism adjusts the relative position of the movable processing component on one end side in the axial direction by moving the movable processing component on one end side on the peripheral surface along the axial direction,
the other adjustment mechanism adjusts the relative position of the movable processing component on the other end side in the axial direction by moving the movable processing component on the other end side on the peripheral surface along the axial direction, and
the shaft-side adjustment mechanism adjusts the position of the rotating roller in the axial direction by moving the rotating roller in the axial direction.

5. An processing apparatus according to any one of claims 1 to 4, wherein
the rotating roller is a first rotating roller that has a first peripheral surface as the peripheral surface,
the processing component is a plurality of first drawing patterns arranged along the axial direction,
the mounting member is a second rotating roller that has a second peripheral surface and rotates with the sheet member being mounted thereon,
a plurality of second drawing patterns arranged along the axial direction are provided on the second peripheral surface,
the first drawing pattern and the second drawing pattern are disk-like patterns,
the first drawing pattern and the second drawing pattern are arranged alternately in the axial direction, and
the first drawing pattern and the second drawing pattern cause the sheet member to extend along the axial direction by nipping the sheet member therebetween with the first rotating roller and the second rotating roller being rotated, while the sheet member is passing between the second rotating roller and the first rotating roller with the sheet member being mounted on the second rotating roller.

6. An processing apparatus according to claim 5, wherein
among the first rotating roller and the second rotating roller, at least one of the rotating rollers is supported in a movable state in such a manner that an interval between the first peripheral surface and the second peripheral surface varies.

7. An processing apparatus according to one of claims 5 and 6, wherein
the sheet member is made of a material having a thermoplastic property, and
among the first rotating roller and the second rotating roller, at least one of the rotating rollers has a heating mechanism provided inside thereof that heats the rotating roller.

8. An processing apparatus according to any one of claims 1 to 7, wherein
among two directions in mutually opposite directions along the axial direction, one direction is referred to as a first direction and the other direction is referred to as a second direction,
the first direction being a direction orienting from the processing component to an end that is nearer to the processing component among the both ends of the rotating roller in the axial direction,
the adjustment mechanism including:
a pulling screw that pulls the processing component in the first direction while being screwed; and
a pressing screw that presses the processing component in the second direction while being screwed,
in a case where the adjustment mechanism moves the processing component in the first direction, the pressing screw is screwed after the pulling screw has been screwed,
in a case where the adjustment mechanism moves the processing component in the second direction, the pulling screw is screwed after the pressing screw has been screwed.

9. A method of processing a sheet member used in manufacturing an absorbent article, comprising:
processing, while the sheet member is passing between a mounting member on which the sheet member is mounted and a rotating roller that rotates with a peripheral surface thereof opposing the mounting member with the sheet member being mounted on the mounting member, the sheet member by causing a processing component provided on the peripheral surface of the rotating roller to come into contact with the sheet member with the rotating roller being rotated,
the processing component being movable on the peripheral surface of the rotating roller along the axial direction,
the method further comprising adjusting, by an adjustment mechanism that adjusts a relative position of the processing component with respect to the peripheral surface in the axial direction, before the processing, the relative position by moving the sheet member on the peripheral surface along the axial direction.
